# EUROPÄISCHE PATENTSCHRIFT

(11) **EP 0 674 090 B1**
(45) Veröffentlichungstag und Bekanntmachung des Hinweises auf die Patenterteilung: **22.07.1998**
(21) Anmeldenummer: 95103618.5
(22) Anmeldetag: 14.03.1995
(51) Int. Cl.: E06B 7/082, E04H 5/04, H02B 7/06

(54) **Lüftertüre**
Ventilation doors
Portes de ventilation

(30) Priorität: 24.03.1994 DE 9404787 U
(43) Veröffentlichungstag der Anmeldung: 27.09.1995
(73) Patentinhaber: Betonbau GmbH, D-68753 Waghäusel (DE)
(72) Erfinder: Primus, Illo-Frank, Dr.-Ing., D-76327 Pfinztal (DE); Kaute, Christoph, Dipl.-Ing., D-76344 Leopoldshafen (DE); Herrmann, Rainer, D-75031 Eppingen (DE)
(74) Vertreter: Hiebsch, Gerhard F., Dipl.-Ing.

(56) Entgegenhaltungen:
- DE-A- 4 213 146
- DE-A- 4 315 443

## Beschreibung

Die Erfindung betrifft eine Lüftertür für eine Umspannstation od. dgl. Gebäude mit in einem Zargenrahmen vorgesehenem, an Scharnieren schwenkbarem Türflügel mit -- Strömungswege für Luft begrenzenden -- Querprofilen, die in einem Rahmen festliegen und jeweils durch einen flächigen Frontsteg, einen dazu geneigten Mittelstreifen und einen zum Frontsteg parallelen Rückensteg die Tiefe des Türflügels bestimmen.

Eine derartige Lüftertür ist der DE-A- 42 13 146 der Anmelderin zu entnehmen. Diese Lüftertür bietet querschnittlich mäanderartige Strömungswege an. Die eine Rinne bildenden -- den Strömungsweg begrenzenden -- Querschnittsteile eines Querprofils sind etwa Tangenten an einen Konstruktionskreis, dessen Mittelpunkt die Kante des in die Rinne ragenden abgewinkelten Querschnittsteiles ist. Die so festgelegten mäanderförmigen Strömungswege erlauben ohne weiteres den Durchtritt der Luft und verhindern durch ihre Querschnittsform und Lage zueinander den Zugriff von außen her.

Bei einem Lüftungselement nach DE-A-43 15 443 zum Einbau in die Außenwand einer elektrischen Umspann- oder Schaltstation weisen -- sich zwischen Seitenwangen in Abstand zueinander erstreckende -- Querprofile jeweils eine -- zwischen zwei im Bereich von Front- sowie Rückwand parallel verlaufenden Längsstegen geneigte -- Profilfläche auf. Dabei liegt der Frontsteg des einen Querprofils dem rückwärtigen Längssteg des darunter verlaufenden Querprofils gegenüber. Zwischen dem oberen Längssteg eines der Querprofile und dem unteren Längssteg eines benachbarten Querprofils ist jeweils ein horizontales Gitterelement lösbar festgelegt und aus dem rückwärtigen Längssteg des Querprofils oberhalb der geneigten Profilfläche ein Kederhohlprofil mit querschnittlich teilkreisförmiger Kedernut herausgeformt. Das Kederhohlprofil bildet mit einer Auflagefläche der Profilfläche einen Einschubschlitz für den Werkstoffstreifen.

In Kenntnis dieses Standes der Technik hat sich der Erfinder das Ziel gesetzt, eine Lüftertür in einfacher Ausgestaltung der Profile anzubieten, die ebenfalls stochersicher ist.

Zur Lösung dieser Aufgabe führen die Lehren der unabhängigen Ansprüche, die Unteransprüche geben günstige Weiterbildungen an.

Erfindungsgemäß liegt dem Frontsteg des einen Querprofils der Rückensteg des darunter verlaufenden Querprofils gegenüber und beide sind durch ein in ihnen lösbar festgelegtes Gitterelement etwa horizontal verbunden, wobei etwa in der Mitte des Türflügels parallel zu den Querprofilen ein Teilungsprofil verläuft mit einem Frontstreifen -- der mehrfachen Steghöhe der Frontstege -- zur Aufnahme eines Türschlosses.

Nach einem weiteren Merkmal der Erfindung sind die Querprofile durch einen Blechprofilrahmen zu einem Lüfterelement vereinigt, welches um die vertikale Achse der Scharniere geschwenkt zu werden vermag.

Auch hat es sich als günstig erwiesen, das Querprofil im Bereich seines Frontsteges und seines Rückensteges jeweils mit einem Steckschlitz für eine Längskante des Gitterelementes auszustatten; der Steckschlitz des Frontsteges fluchtet dann mit dem des Rückenstegs des darunter verlaufenden Querprofils.

Das Teilungsprofil enthält ein Schwenkhebelschloß.

Im übrigen kann der Sockelteil des Blechprofilrahmens von einem Profilstreifen gebildet sein, der an den Frontsteg eines unteren Querprofils angeformt ist.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:

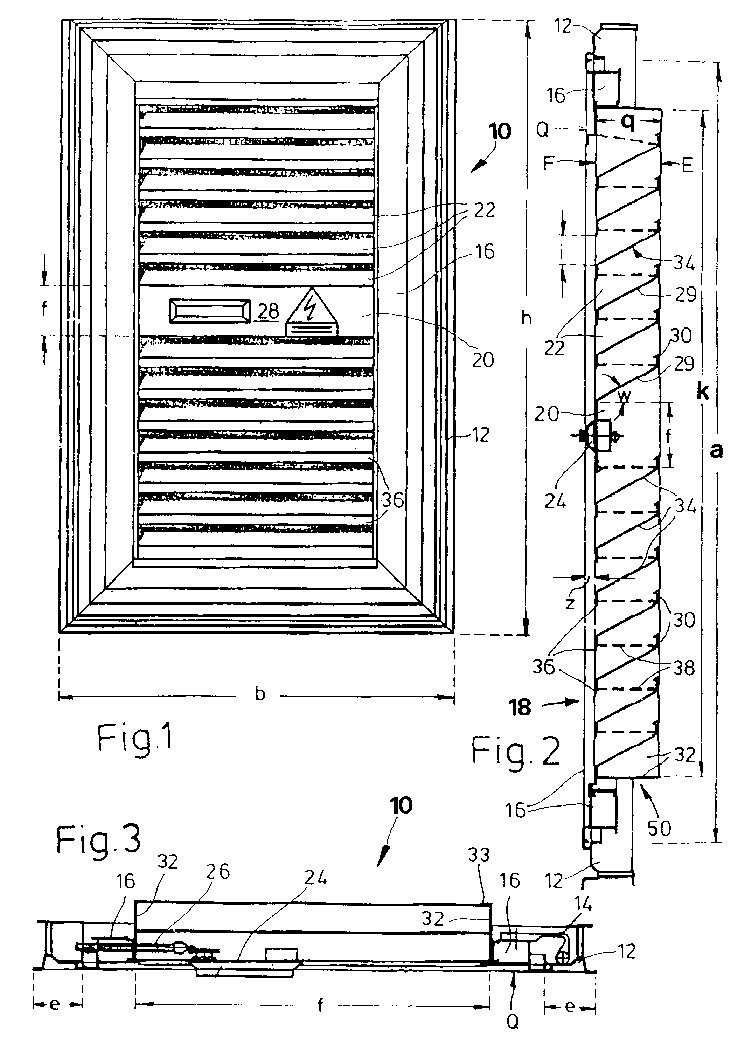

- Fig. 1:: die Frontansicht auf eine Lüftertür mit Strömungswege aufweisendem Türflügel;
- Fig. 2:: einen gegenüber Fig. 1 vergrößerten Längsschnitt durch die Lüftertür;
- Fig. 3:: einen vergrößerten Querschnitt durch die Lüftertüre der Fig. 1;
- Fig. 4:: einen vergrößerten Ausschnitt aus Fig. 2 zu einer anderen Ausführung.

Eine Lüftertür 10 einer äußeren Höhe h von etwa 1450 mm und einer Breite b von hier 915 mm für eine aus Gründen der Übersichtlichkeit nicht dargestellte Umschalt- oder Kleinstation weist eine Türzarge 12 der Profildicke e von hier 80 mm und in dieser an innenliegenden Türbändern 14 ein Hohlprofil als Türrahmen 16 eines Türflügels 18 der Höhe a von etwa 1300 mm auf.

Das vom Türrahmen 16 umgebene Türfeld ist in etwa halber Türhöhe durch ein Teilungsprofil 20 geteilt, beidseits dessen -- nach oben und unten -- parallele Öffnungsschlitze 22 der Schlitzhöhe i verlaufen. Das Teilungsprofil 20 trägt ein Schwenkhebelschloß 24 in Form eines sog. Dirak-Schloßes, dessen Sperriegel 26 den Türrahmen 16 durchragt und in Schließstellung in die Türzarge 12 eingreift.

Das Teilungsprofil 20 besteht aus einem die Lage der Frontebene F des Türflügels 18 bestimmenden Frontstreifen 28 der Fronthöhe f von etwa 120 mm, einem im Winkel w von etwa 45° zur Horizontalen nach innen oben geneigten Mittelstreifen 29 und einem von dessen Hinterkante einstückig aufragenden Rückensteg 30; dieser bestimmt die Innenfläche E des Türflügels 18.

An der Innenseite des Türrahmens 16 läuft ein flaches Blechprofil 32, dessen Breite der Tiefe t des Türflügels 18 entspricht, mit einer Abkantung 33 als Rahmen für Querprofile 34, die jeweils aus einem schmalen Frontsteg 36 der Steghöhe n, einem Mittelstreifen 29 sowie einem Rückensteg 30 bestehen sowie parallel zum Teilungsprofil 20 so festgelegt sind, daß der Frontsteg 36 des einen Querprofils 34 dem Rückensteg 30 des darunter liegenden Querprofils 34 gegenüberliegt; zwischen diesen verläuft ein Gitterblech 38 als Stocherschutz.

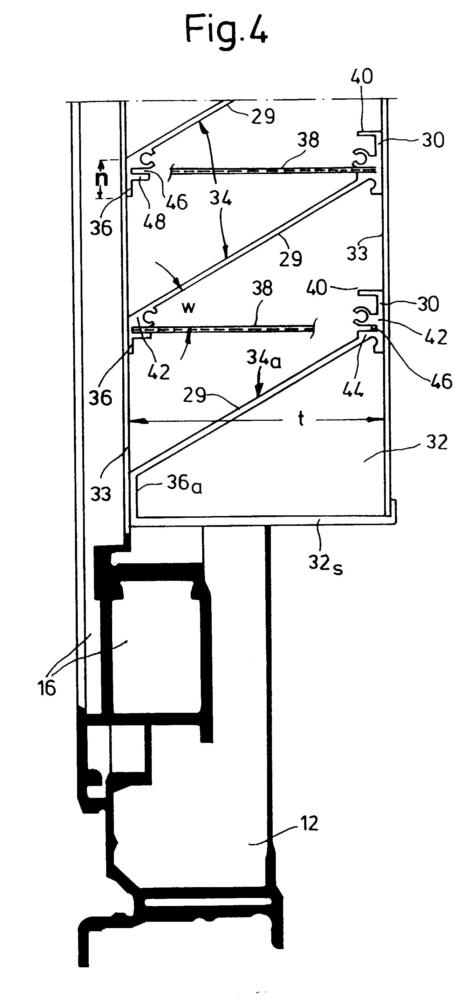

Wie Fig. 4 erkennen läßt, ist in dieser Ausführung das unterste Querprofil 34ₐ mit dem Sockelteil 32ₛ des Blechprofilrahmens 32 einstückig, d. h. an den Sockelteil 32ₛ mit seinem verlängerten Frontsteg 36ₐ angeformt. Der Rückensteg 30 des Querprofils 34ₐ entspricht jenem der anderen Querprofile 34; er ist als Hakenprofil mit Kopfleiste 40 und darunter liegendem Kederprofil 42 geformt. Letzteres begrenzt mit einem unteren Längsstreifen 44 des Rückenstegs 30 einen Einschubschlitz 46 für jenes Gitterblech 38.

Das im Einschubschlitz 46 des untersten Querprofils 34ₐ steckende Gitterblech 38 ruht mit seiner anderen Längskante im Einschubschlitz 46 des nächsthöheren Querprofils 34, aus dessen Frontsteg 36 eine Auflagerippe 48 und über dieser ein Kederprofil 42 herausgeformt sind.

Die Querprofile 34, 34ₐ und das Teilungsprofil 20 bilden mit ihrem Blechprofilrahmen 32 ein stochersicheres Lüfterelement 50 einfacher Bauart der Höhe k von 1120 mm und der Breite q von 620 mm, das um ein Rücksprungmaß z gegenüber der Frontfläche Q zurückversetzt ist.

## Patentansprüche

1. Lüftertür (10) für eine Umschaltstation od. dgl. Gebäude mit in einem Zargenrahmen vorgesehenem, an Scharnieren schwenkbarem Türflügel (18) mit Strömungswege für Luft begrenzenden Querprofilen (34), die in einem Rahmen festliegen und jeweils durch einen flächigen Frontsteg (36), einen dazu geneigten Mittelstreifen (29) und einen zum Frontsteg (36) parallelen Rückensteg (30) die Tiefe des Türflügels bestimmen,
dadurch gekennzeichnet,
daß dem Frontsteg (36) des einen Querprofils (34) der Rückensteg (30) des darunter verlaufenden Querprofils gegenüberliegt und beide durch ein in ihnen lösbar festgelegtes Gitterelement (38) etwa horizontal verbunden sind, wobei etwa in der Mitte des Türflügels (18) parallel zu den Querprofilen (34) ein Teilungsprofil (20) verläuft mit einem Frontstreifen (28) der mehrfachen Steghöhe (n) der Frontstege (36) zur Aufnahme eines Türschlosses (24).

2. Lüftertür nach Anspruch 1, dadurch gekennzeichnet, daß die Querprofile (34) durch einen Blechprofilrahmen (32) zu einem Lüfterelement (50) verbunden sind, welches um die vertikale Achse der Scharniere schwenkbar ist.

3. Lüftertür nach Anspruch 1 oder 2, dadurch gekennzeichnet, daß das Querprofil (34) im Bereich seines Frontsteges (36) und seines Rückensteges (30) jeweils mit einem Steckschlitz (46) für eine Längskante des Gitterelements (38) versehen ist und der Steckschlitz des Frontsteges mit dem des Rückensteges des darunter verlaufenden Querprofils fluchtet.

4. Lüftertür nach einem der Ansprüche 1 bis 3, dadurch gekennzeichnet, daß der Sockelteil des Blechprofilrahmens (32) von einem Profilstreifen (32ₛ) gebildet ist, der an den Frontsteg (36ₐ) eines unteren Querprofils (34ₐ) angeformt ist.

## Claims

1. Vent door (10) for a switching station or the like building with a door leaf (18) provided in a door frame and pivotable on hinges, with transverse profiles (34) which define flow paths for air and which are fixed in a frame and in each case determine the depth of the door leaf by a two-dimensional front web (36), a centre strip (29) at an angle thereto and a rear web (30) parallel to the front web (36),
characterised in that opposite the front web (36) of one transverse profile (34) is the rear web (30) of the transverse profile underneath, and the two are connected approximately horizontally by a grid element (38) fixed releasably in them, wherein approximately at the centre of the door leaf (18) parallel to the transverse profiles (34) extends a dividing profile (20) with a front strip (28) having a web height (n) which is a multiple of that of the front webs (36) for receiving a door lock (24).

2. Vent door according to claim 1, characterised in that the transverse profiles (34) are joined by a sheet metal profile frame (32) into a vent element (50) which is pivotable about the vertical axis of the hinges.

3. Vent door according to claim 1 or 2, characterised in that the transverse profile (34) in the region of its front web (36) and its rear web (30) is in each case provided with an insertion slot (46) for a longitudinal edge of the grid element (38) and the insertion slot of the front web is aligned with that of the rear web of the transverse profile underneath.

4. Vent door according to any of claims 1 to 3, characterised in that the base portion of the sheet metal profile frame (32) is formed by a profile strip (32ₛ) which is formed integrally with the front web (36ₐ) of a lower transverse profile (34ₐ).

## Revendications

1. Porte de ventilation (10) pour un poste de commutation ou un bâtiment similaire, présentant un battant de porte (18) muni d'un cadre de châssis et susceptible de pivoter sur des charnières, avec des profilés transversaux (34), qui délimitent les trajets d'écoulement pour l'air, qui sont fixés à un cadre et qui déterminent chacun l'épaisseur du battant de porte par l'intermédiaire d'une branche frontale plate (36), d'une bande médiane (29) inclinée par rapport à la branche frontale et d'une branche arrière (30) parallèle à la branche frontale (36),
caractérisée en ce que,
la branche frontale (36) de l'un des profilés transversaux (34) est disposée en face de la branche arrière (30) du profilé transversal s'étendant au-dessous, et en ce que les deux branches sont reliées de façon sensiblement horizontale par un élément de grille (38) fixé dans ces branches de manière amovible, et en ce que sensiblement au milieu du battant de porte (18), s'étend parallèlement aux profilés transversaux (34) un profilé de séparation (20) qui comporte une bande frontale (28) s'étendant sur plusieurs hauteurs de branche (n) de la branche frontale (36), et destinée à recevoir une serrure de porte (24).

2. Porte de ventilation selon la revendication 1, caractérisée en ce que les profilés transversaux (34) sont reliés par un cadre de profilé en tôle (32) pour former un élément de ventilation (50), qui est susceptible de pivoter autour de l'axe vertical des charnières.

3. Porte de ventilation selon la revendication 1 ou 2, caractérisée en ce que le profilé transversal (34) est muni dans la zone de sa branche frontale (36) et de sa branche arrière (30). chaque fois d'une fente d'enfichage (46) pour un bord long de l'élément de grille (38), et en ce que la fente d'enfichage de la branche frontale, est alignée sur celle de la branche arrière du profilé transversal s'étendant au-dessous.

4. Porte de ventilation selon la revendication 1 à 3, caractérisée en ce que la partie de socle du cadre à profilé en tôle (32) est constituée par une bande profilée (32ₛ), qui est formée sur la branche frontale (36ₐ) d'un profilé transversal inférieur (34ₐ).
